# EUROPÄISCHE PATENTANMELDUNG

(11) **EP 4 513 148 A1**
(43) Veröffentlichungstag der Anmeldung: **26.02.2025**
(21) Anmeldenummer: 24193208.6
(22) Anmeldetag: 06.08.2024
(51) Int. Cl.: G01F 1/06, G01P 5/02

(54) **STRÖMUNGSSONDE UND VERWENDUNG EINES ROTORS**

(30) Priorität: 22.08.2023 DE 102023122390
(71) Anmelder: Testo SE & Co. KGaA, 79822 Titisee-Neustadt (DE)
(72) Erfinder: SCHOTT, Stefan, 79235 Oberbergen (DE)
(74) Vertreter: Maucher Jenkins Patent- und Rechtsanwälte

(57) **Zusammenfassung**

Es wird vorgeschlagen, dass bei einer Strömungssonde (1) zum Messen einer Strömungsgeschwindigkeit und zusätzlich oder alternativ zum Messen einer Strömungsrate, wobei die Strömungssonde (1) über einen Rotor (2) verfügt, die Rotationsachse (8) des Rotors (2) quer, bevorzugt orthogonal, zur Strömungsrichtung eines Fluides angeordnet ist. (vgl. Fig.7)

## Beschreibung

Die Erfindung betrifft eine Strömungssonde zum Messen einer Strömungsgeschwindigkeit und zusätzlich oder alternativ zum Messen einer Strömungsrate, wobei die Strömungssonde über einen Rotor verfügt. Derartige Strömungssonden finden in der Praxis vielfach Anwendung.

Die Erfindung betrifft weiter die Verwendung eines Rotors in einer Strömungssonde. Derartige Verwendungen sind im Stand der Technik bekannt.

Eine Strömungssonde kann beispielsweise als ein Messinstrument charakterisiert werden, das zur Bestimmung von Strömungseigenschaften in Flüssigkeiten oder Gasen eingesetzt wird. Sie wird häufig verwendet, um Parameter wie Strömungsgeschwindigkeit, Strömungsrate, Richtung, Druck und Temperatur der Strömung zu erfassen. Strömungssonden können beispielsweise in vielen Bereichen der Wissenschaft und Technik von Bedeutung sein, darunter in der Luft- und Raumfahrt, der Meteorologie, der Umwelttechnik und der Prozessindustrie. Strömungssonde sind essentiell für die genaue Analyse und Kontrolle von Strömungsprozessen und spielen eine wichtige Rolle in der Optimierung von Systemen, in denen Strömung eine kritische Rolle spielt.

Im Stand der Technik werden häufig Strömungssonden mit einem Flügelrad als Rotor verwendet, wobei eine Rotationsachse des Flügelrads entlang einer Strömungsrichtung eines Fluides (Gas oder Flüssigkeit) angeordnet ist. Eine Strömungssonde mit Flügelrad muss sehr genau ausgerichtet werden, um exakte Strömungsgeschwindigkeiten und/oder Strömungsraten zu messen. Kleinste Ungenauigkeiten in der Ausrichtung der Strömungssonde führen hierbei zu großen Messungenauigkeiten. Eine herkömmliche Flügelradsonde hat den Nachteil, dass im Messkanal der Maximalwert einer Strömung gesucht werden muss, da die Strömung in einem Kanal oft nicht laminar ist. Mit leichten rotatorischen Bewegungen der Flügelradsonde muss also das Maximum der Strömungsgeschwindigkeit gesucht werden. Im Stand der Technik weisen die Strömungssonden also Richtungsabhängigkeiten auf. Hier setzt die vorliegende Erfindung an und möchte diesen Nachteil, nämlich die Richtungsabhängigkeit der herkömmlichen Strömungssonden, aus dem Stand der Technik umgehen.

Der Erfindung liegt die Aufgabe zugrunde, die Messgenauigkeit einer Strömungssonde in Bezug zur Strömungsgeschwindigkeit und zusätzlich oder alternativ zur Strömungsrate zu verbessern. Zusätzlich liegt der Erfindung die Aufgabe zugrunde, die Betriebseigenschaften einer Strömungssonde zu verbessern.

Die Aufgabe wird durch die Merkmale der unabhängigen Ansprüche gelöst. Vorteilhafte Ausgestaltungen sind in den Unteransprüchen beschrieben.

Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zur Lösung der gestellten Aufgabe schlägt die Erfindung die Merkmale von Anspruch 1 vor. Insbesondere wird somit erfindungsgemäß bei einer Strömungssonde der eingangs beschriebenen Art zur Lösung der genannten Aufgabe vorgeschlagen, dass eine Rotationsachse des Rotors quer zur Strömungsrichtung eines Fluides, nämlich eines Gases oder einer Flüssigkeit, angeordnet ist. Bevorzugt ist die Rotationsachse des Rotors orthogonal zur Strömungsrichtung des Fluides angeordnet. Als orthogonal werden hier beispielsweise Winkel zwischen 85° und 95° oder im Rahmen der Messgenauigkeit und/oder der Fertigungstoleranzen Winkel um 90° bezeichnet. Somit kann eine Richtungsunabhängigkeit der Strömungssonde gewährleistet werden und die Messgenauigkeit der Strömungsgeschwindigkeit und/oder Strömungsrate erhöht werden. Eine mechanische Ausrichtung in einem Strömungskanal ist hierbei nicht mehr notwendig, was zudem die Installationsdauer der Strömungssonde verkürzt.

Zur Lösung der gestellten Aufgabe schlägt die Erfindung alternativ oder zusätzlich die Merkmale von Anspruch 2 vor. Insbesondere wird somit erfindungsgemäß bei einer Strömungssonde der eingangs beschriebenen Art zur Lösung der genannten Aufgabe vorgeschlagen, dass eine, insbesondere die bereits erwähnte, Rotationsachse des Rotors längs einer Längsachse der Strömungssonde ausgerichtet ist. Somit kann die Messgenauigkeit der Strömungssonde, insbesondere bei nichtlaminaren Strömungen, erhöht werden. Als Längsachse kann beispielsweise die Verbindungslinie zwischen einem Griff und einem distalen Ende bezeichnet werden. Alternativ oder zusätzlich kann beispielsweise gesagt werden, dass die Längsachse die längste Achse der Strömungssonde darstellt. Die Längsachse kann beispielsweise auch durch einen Griff der Strömungssonde vorgegeben sein.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 und/oder Anspruch 2 kombiniert werden können.

Bei einer vorteilhaften Ausgestaltung kann vorgesehen sein, dass der Rotor in einem Käfig angeordnet ist. Somit kann der Rotor beim Einbau und insgesamt vor mechanischen Kontakten geschützt werden.

Beispielsweise kann der Käfig so ausgebildet sein, dass eine Strömungsrichtung eines Fluids, beispielsweise die bereits erwähnte Strömungsrichtung, definiert ist. Somit ist die Strömung eines Fluids definiert messbar.

Bei einer vorteilhaften Ausgestaltung kann vorgesehen sein, dass der Rotor ein H-Darrieus-Rotor und zusätzlich oder alternativ ein Savonius-Rotor ist. Somit kann eine Richtungsabhängigkeit der Messwerte, insbesondere der Strömungsgeschwindigkeit und/oder der Strömungsrate, verringert werden.

Ein H-Darrieus-Rotor verfügt über einen zentralen Rotationsbereich und über Rotorblätter, welche mit Streben an dem Rotationsbereich verbunden sind. Die Rotorblätter sind parallel zu der Rotationsachse angeordnet. Der H-Darrieus-Rotor ist eine Weiterentwicklung des Darrieus-Rotors, in welchem die Rotorblätter mit der Rotationsachse zusammenlaufen. Der H-Darrieus-Rotor zeichnet sich durch die richtungsunabhängige Rotation des Rotors aus und durch eine vergrößerte Stabilität und Strukturfestigkeit. Die Konstruktion und Wartung eines H-Darrieus-Rotors kann allerdings komplexer sein.

Ein Savonius-Rotor verfügt über gekrümmte Rotorblätter, welche strebenfrei mit dem zentralen Rotationsbereich des Rotors verbunden sind. Die Rotorblätter sind spiegelantisymmetrisch zur Rotationsachse angeordnet.

In der vorliegenden Erfindung kann der Rotor sowohl entweder ein H-Darrieus-Rotor oder ein Savonius-Rotor, als auch eine Mischung aus einem H-Darrieus-Rotor und einem Savonius-Rotor sein. Die Rotationsachse des Rotors ist orthogonal zu der Strömungsrichtung des Fluides angeordnet beziehungsweise längs der Längsachse der Strömungssonde ausgerichtet.

Bei einer vorteilhaften Ausgestaltung kann vorgesehen sein, dass an einem proximalen Ende der Strömungssonde ein Griff ausgebildet ist. Der Griff ist zu einem manuellen Angreifen durch einen Benutzer vorgesehen. Die Strömungssonde hat somit eine derartige Größe, die es ermöglicht durch einen Benutzer in der Hand gehalten zu werden und in einen Strömungsfluss gebracht zu werden. Der Begriff "Griff" wird hier synonym zu dem Begriff "Haltegriff" verwendet.

Die hier beschriebene Strömungssonde ist zu einem manuellen Greifen durch einen Benutzer vorgesehen und hat einen Griff und ist nicht zu einem Einbau in einer Rohrleitung oder einer benutzerlosen Verwendung geeignet. Die Strömungssonde ist zu einem Messen einer Strömungsgeschwindigkeit und/oder einer Strömungsrate vorgesehen. Um zuverlässige Ergebnisse zu liefern, muss die Strömungssonde vor ihrer Benutzung sorgfältig kalibriert werden.

Bei einer vorteilhaften Ausgestaltung kann vorgesehen sein, dass der Rotor über ein magnetisches Element verfügt, welches mit einem Hall-Sensor zusammenwirkt, um die Drehzahl des Rotors zu messen. Somit kann die Drehzahl des Rotors effizient und einfach gemessen werden.

Bei einer vorteilhaften Ausgestaltung kann vorgesehen sein, dass der Hall-Sensor an dem Käfig oder an einem Sondenkopf ausgebildet ist. Somit kann der Hall-Sensor vibrationsfrei an der Strömungssonde gelagert werden.

Die Strömungssonde umfasst den Käfig, den Sondenkopf, und den Rotor.

Bei einer vorteilhaften Ausgestaltung kann vorgesehen sein, dass der Käfig über durchströmbare Durchlassöffnungen verfügt. Somit kann das Fluid durch den Käfig strömen und den Rotor, welcher sich im Käfig befindet, antreiben.

Bei einer vorteilhaften Ausgestaltung kann vorgesehen sein, dass der Rotor über Rotorblätter verfügt, welche exzentrisch zu der Rotationsachse des Rotors angeordnet sind. Bevorzugt sind die Rotorblätter parallel zu der Rotationsachse des Rotors angeordnet. Somit kann die Messgenauigkeit der Strömungssonde erhöht werden.

Bei einer vorteilhaften Ausgestaltung kann vorgesehen sein, dass die Rotorblätter in einem Endbereich mit der Rotationsachse des Rotors zusammenfallen. Bevorzugt fallen die Rotorblätter strebenfrei mit dem Endbereich der Rotationsachse des Rotors zusammen. Somit kann die mechanische Stabilität der Rotorblätter erhöht werden.

Bei einer vorteilhaften Ausgestaltung kann vorgesehen sein, dass der Käfig zylindrisch ist. Somit kann der Strömungswiderstand in einem fließenden Fluid verringert werden und Strömungslinien um den Käfig normalisiert werden. Unter normalisierten Strömungslinien wird eine laminare Strömung um den Käfig verstanden, in welcher die Strömungslinien parallel sind.

Bei einer vorteilhaften Ausgestaltung kann vorgesehen sein, dass der Rotor aus einem Metall oder einem Kunststoff gefertigt ist. Somit kann der Rotor situationsgemäß auf die Art des fließenden Fluids und auf die Strömungsverhältnisse angepasst werden.

Bei einer vorteilhaften Ausgestaltung kann vorgesehen sein, dass der Sondenkopf an dem Käfig angeordnet ist. Bevorzugt ist im Sondenkopf eine Steuerungs- und Messelektronik verbaut. Somit kann eine platzsparende Anordnung bereitgestellt werden.

Bei einer vorteilhaften Ausgestaltung kann vorgesehen sein, dass die Rotorblätter gegenüber der Rotationsachse des Rotors angewinkelt sind. Bevorzugt sind die Rotorblätter gegenüber der Rotationsachse des Rotors nicht parallel. Somit kann die Messgenauigkeit weiter erhöht werden.

Bei einer vorteilhaften Ausgestaltung kann vorgesehen sein, dass die Rotorblätter gekrümmt sind. Somit kann der Strömungswiderstand der Strömungssonde verringert werden.

Bei einer vorteilhaften Ausgestaltung kann vorgesehen sein, dass die Rotorblätter mittels Streben mit einem zentralen Rotationsbereich, insbesondere der Rotationsachse, des Rotors verbunden sind. Somit kann die mechanische Stabilität der Rotorblätter erhöht werden.

Bei einer vorteilhaften Ausgestaltung kann vorgesehen sein, dass die Streben mit der Rotationsachse einen Winkel kleiner als oder gleich 90° einschließen. Somit kann der Rotor situationsgenau auf die Strömungskanaleigenschaften angepasst werden.

Bei einer vorteilhaften Ausgestaltung kann vorgesehen sein, dass der Käfig mit dem Sondenkopf mittels eines Gewindes verbunden ist. Somit kann die mechanische Stabilität der Verbindung gewährleistet werden.

Bei einer vorteilhaften Ausgestaltung kann vorgesehen sein, dass die Rotorblätter strebenfrei mit dem zentralen Rotationsbereich des Rotors verbunden sind. Somit kann eine kleinere und platzsparende Anordnung bereitgestellt werden.

Bei einer vorteilhaften Ausgestaltung kann vorgesehen sein, dass die Rotorblätter spiegelantisymmetrisch um die Rotationsachse angeordnet sind. Somit kann die Richtungsunabhängigkeit der Messwerte gewährleistet werden.

Bei einer vorteilhaften Ausgestaltung kann vorgesehen sein, dass die Rotorblätter zu einer Anströmung quer zur Rotationsachse ausgebildet sind. Somit kann eine Funktionalität der Strömungssonde gewährleistet werden und eine Richtungsunabhängigkeit erreicht werden.

Bei einer vorteilhaften Ausgestaltung kann vorgesehen sein, dass die Rotorblätter zu einer Anströmung mit Gas ausgebildet sind. Bevorzugt ist das Gas eine atmosphärische Luft. Somit kann eine zuverlässige und robuste Anwendung bereitgestellt werden.

Zur Lösung der genannten Aufgabe sind erfindungsgemäß die Merkmale des auf eine Verwendung eines Rotors gerichteten nebengeordneten Anspruchs vorgesehen. Insbesondere wird zur Lösung der genannten Aufgabe somit erfindungsgemäß bei einer Verwendung der eingangs beschriebenen Art vorgeschlagen, dass bei der Verwendung eines Rotors, vorzugsweise eines H-Darrieus-Rotors und/oder eines Savonius-Rotors, in einer Strömungssonde, eine Rotationsachse des Rotors quer, insbesondere orthogonal, zur Strömungsrichtung eines Fluids angeordnet ist. Alternativ oder zusätzlich kann die Rotationsachse des Rotors längs einer Längsachse der Strömungssonde angeordnet sein. Somit kann die Richtungsunabhängigkeit der Messwerte (Strömungsgeschwindigkeit und/oder Strömungsrate), beispielsweise eine Indifferenz der Messwerte in Bezug auf die Drehung des Rotors/Sondenkopfes um die Längsachse und/oder eine Achse, die orthogonal auf der Strömungsrichtung steht, erreicht werden. Die Suche nach einem maximalen Messwert kann somit entfallen. Bevorzugt ist das Fluid ein Gas.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen und Verfahren.

Es zeigt:
- Fig. 1: eine Strömungssonde im Stand der Technik in einer direkten Ansicht und
- Fig. 2: die Strömungssonde im Stand der Technik aus Fig. 1 in einer perspektivischen Ansicht und
- Fig. 3: einen erfindungsgemäßen Savonius-Rotor und
- Fig. 4: einen erfindungsgemäßen H-Darrieus-Rotor und
- Fig. 5: einen weiteren erfindungsgemäßen H-Darrieus-Rotor mit einem magnetischen Element und
- Fig. 6: einen erfindungsgemäßen Käfig mit dem H-Darrieus-Rotor in Normalansicht und
- Fig. 7: den Käfig mit dem H-Darrieus-Rotor aus Fig. 6 in einer perspektivischen Ansicht und
- Fig. 8: eine erfindungsgemäße Strömungssonde in einer schematischen Darstellung.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszeichen.

Zur besseren Übersicht sind in den Figuren nicht alle Bezugszeichnen gesetzt, obwohl die Elemente sehr wohl in den Figuren vorhanden sein können. Gleiche Bezugszeichen bezeichnen jedoch funktionell und/oder konstruktiv gleiche Bauteile und Funktionseinheiten.

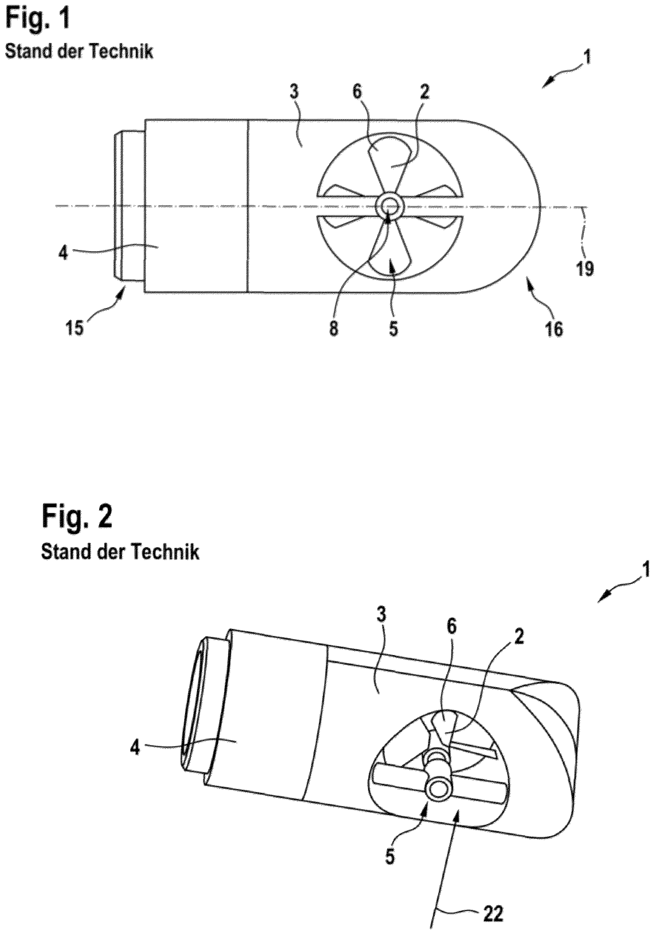

Fig. 1 zeigt eine Strömungssonde 1 im Stand der Technik in einer direkten Ansicht.

Die Strömungssonde 1 umfasst einen Rotor 2, einen Käfig 3 und einen Sondenkopf 4. Dargestellt ist nur der distale Teil der Strömungssonde 1; ein Schaft und ein sich daran anschließender Griff sind zur Vereinfachung nicht dargestellt.

Der Rotor 2 ist als ein Flügelrad-Rotor 5 ausgebildet. Der Flügelrad-Rotor verfügt über vier Rotorblätter 6, welche jeweils in einem Winkel von 90° zueinander angeordnet sind. Die Strömungssonde 1 im Stand der Technik muss im Einbau an die Strömungsverhältnisse angepasst werden, damit sie zuverlässige Messergebnisse liefert. Für die Strömungssonde 1 muss das Maximum der Strömungsgeschwindigkeit gesucht werden, was auch die Messdauer verlängert. Eine Rotationsachse 8 (hier nicht dargestellt) des Flügelrad-Rotors 5 ist entlang der Strömungsrichtung 22 eines Fluides, nämlich einer Flüssigkeit oder eines Gases, ausgerichtet. Die Fig. 2 zeigt die Strömungssonde 1 im Stand der Technik aus Fig. 1 in einer perspektivischen Ansicht. Die Strömungsrichtung 22 ist durch den Käfig 3 vorgegeben.

Der Rotor 2 hat somit eine Rotationsachse 8 (senkrecht zur Zeichenebene in Fig. 1), die senkrecht zur Längsachse 19 der Strömungssonde 1 ausgerichtet ist.

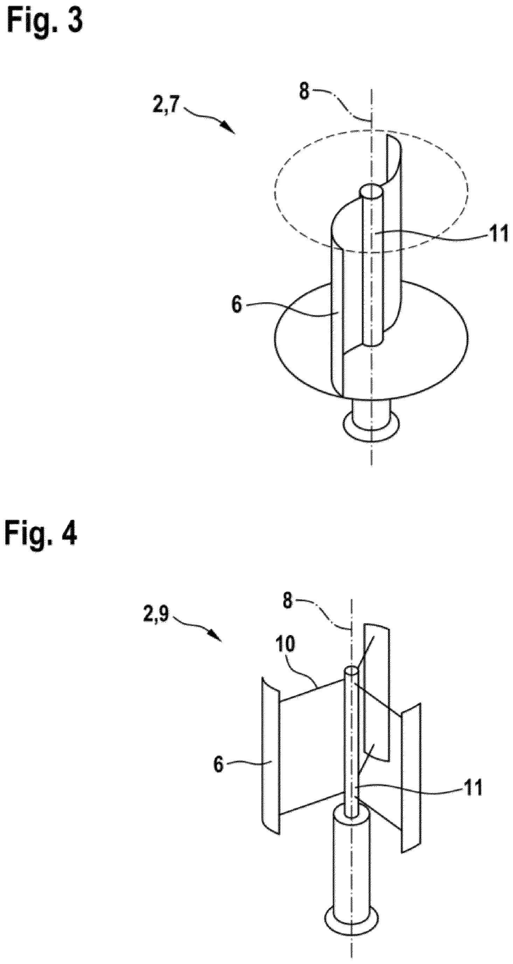

Fig. 3 zeigt einen erfindungsgemäßen Savonius-Rotor 7. Der Savonius-Rotor 7 verfügt über zwei Rotorblätter 6, welche gekrümmt sind und spiegelantisymmetisch um die Rotationsachse 8 angeordnet sind. Die Rotationsachse 8 des Savonius-Rotors 7 ist quer, insbesondere orthogonal, zur Strömungsrichtung des Fluides ausgerichtet.

Fig. 4 zeigt einen erfindungsgemäßen H-Darrieus-Rotor 9. Der H-Darrieus-Rotor 9 verfügt über drei Rotorblätter 6, die über Streben 10 mit einem zentralen Rotationsbereich 11 verbunden sind. Die Rotorblätter 6 sind parallel zur Rotationsachse 8 des H-Darrieus-Rotors 9 angeordnet. Die Streben 10 bilden mit der Rotationsachse 8 einen Winkel von 90°. Die Rotationsachse 8 des H-Darrieus-Rotors 9 ist quer, insbesondere orthogonal, zur Strömungsrichtung des Fluides ausgerichtet.

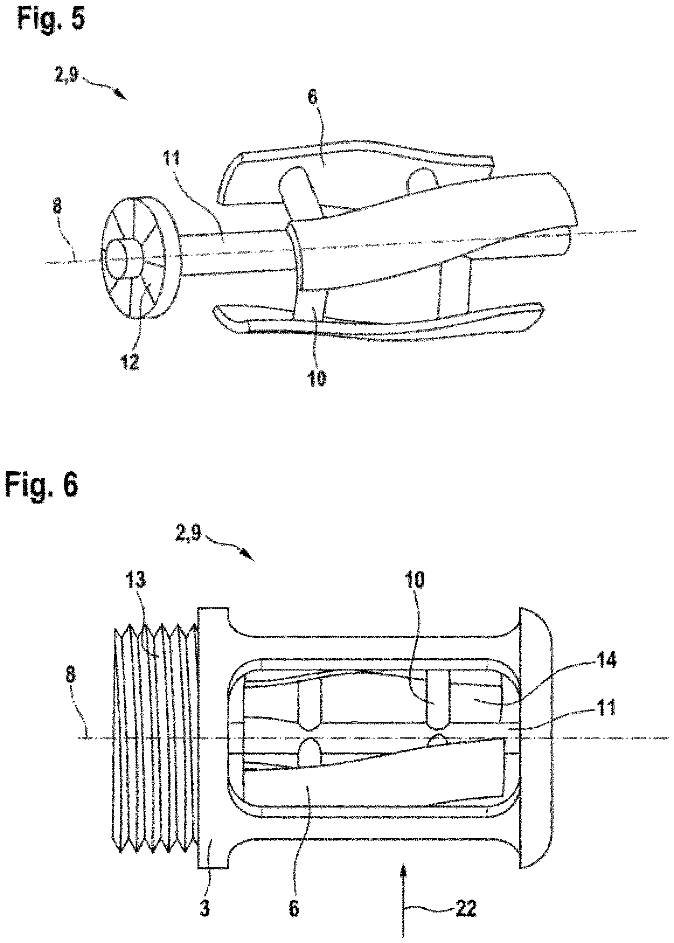

Fig. 5 zeigt einen weiteren erfindungsgemäßen H-Darrieus-Rotor 9 mit einem magnetischen Element 12. Der H-Darrieus-Rotor 9 verfügt über drei Rotorblätter 6, die über Streben 10 mit einem zentralen Rotationsbereich 11 verbunden sind. Die Rotorblätter 6 sind gekrümmt. Die Rotorblätter 6 sind gegenüber der Rotationsachse 8 des Rotors 2 angewinkelt, insbesondere nicht parallel. Die Streben 10 sind in einem Winkel von 90° mit dem zentralen Rotationsbereich 11 verbunden. Es ist auch möglich, dass die Streben 10 in einem Winkel kleiner als 90° mit dem zentralen Rotationsbereich 11 verbunden sind. Das magnetische Element 12 wirkt mit einem Hall-Sensor (hier nicht dargestellt) zusammen, um die Drehzahl des Rotors 2 zu messen. Der Hall-Sensor ist an dem Käfig 3 (hier nicht dargestellt) oder an dem Sondenkopf 4 (hier nicht dargestellt) ausgebildet.

Fig. 6 zeigt einen erfindungsgemäßen Käfig 3 mit dem H-Darrieus-Rotor 9 in Normalansicht. Der Käfig 3 verfügt über ein Gewinde 13, mit welchem der Käfig 3 mit dem Sondenkopf 4 (hier nicht dargestellt) verbindbar ist. Der Käfig 3 ist zylindrisch ausgebildet und verfügt über durchströmbare Durchlassöffnungen 14. Die Rotorblätter 6 des H-Darrieus-Rotors 9 sind mittels Streben 10 mit dem zentralen Rotationsbereich 11 verbunden. Die Rotorblätter 6 sind selbst gekrümmt und gegenüber der Rotationsachse 8 des Rotors 2 angewinkelt.

Die Rotorblätter 6 sind zu einer Anströmung quer zur Rotationsachse 8 ausgebildet.

Die Rotorblätter 6 sind zu einer Anströmung mit Gas ausgebildet. Bevorzugt ist das Gas eine atmosphärische Luft. Alternativ kann das Gas auch ein Druckgas sein, insbesondere ein Gas mit einem höheren Druck als der Atmosphärendruck.

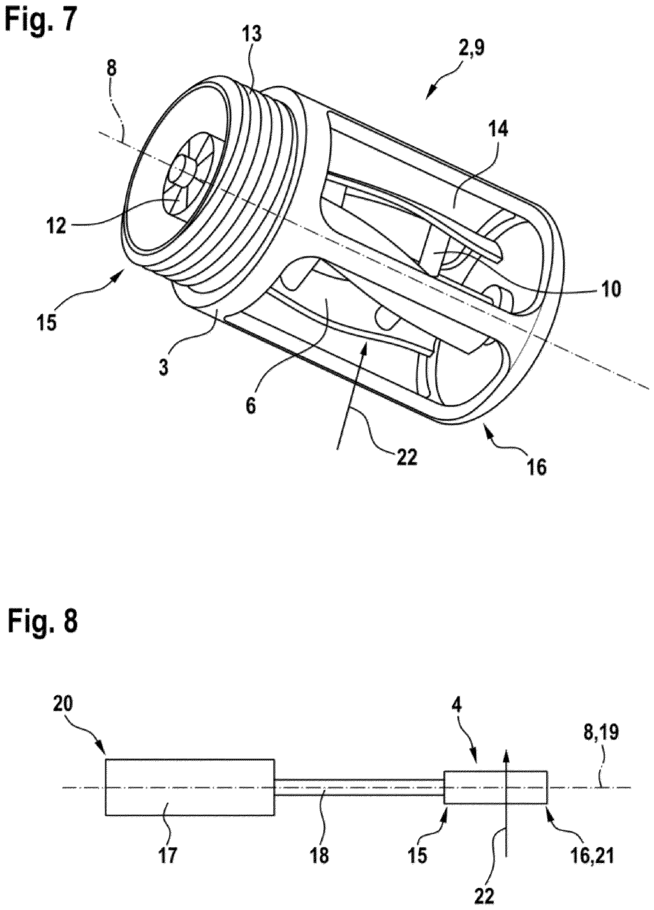

Fig. 7 zeigt den Käfig 3 mit dem H-Darrieus-Rotor 9 aus Fig. 6 in einer perspektivischen Ansicht.

Fig. 8 zeigt eine erfindungsgemäß Strömungssonde 1 mit einem Sondenkopf 4, der beispielsweise gemäß den Figuren 3 bis 7 ausgebildet sein kann. Das distale Ende 16 des Sondenkopfes 4 bildet gleichzeitig das distale Ende 21 der Strömungssonde 1. An das proximalen Ende 15 des Sondenkopfes 4 schließt sich ein Schaft 18 an, der zu einem Griff 17 führt. Der Griff 17 endet an einem proximalen Ende 20 der Strömungssonde 1. Die Längsachse 19 der Strömungssonde 1 fällt mit der Rotationsachse 8 des nicht weiter dargestellten Rotors 2 zusammen.

Es wird vorgeschlagen, dass bei einer Strömungssonde 1 zum Messen einer Strömungsgeschwindigkeit und zusätzlich oder alternativ zum Messen einer Strömungsrate, wobei die Strömungssonde 1 über einen Rotor 2 verfügt, die Rotationsachse 8 des Rotors 2 quer, bevorzugt orthogonal, zur Strömungsrichtung eines Fluides angeordnet ist.

### Bezugszeichenliste

- 1: Strömungssonde
- 2: Rotor
- 3: Käfig
- 4: Sondenkopf
- 5: Flügelrad-Rotor
- 6: Rotorblätter
- 7: Savonius-Rotor
- 8: Rotationsachse
- 9: H-Darrieus-Rotor
- 10: Streben
- 11: zentraler Rotationsbereich
- 12: magnetisches Element
- 13: Gewinde
- 14: Durchlassöffnungen
- 15: proximales Ende von 4
- 16: distales Ende von 4
- 17: Griff
- 18: Schaft
- 19: Längsachse
- 20: proximales Ende von 1
- 21: distales Ende von 1
- 22: Strömungsrichtung

## Patentansprüche

1. Strömungssonde (1) zum Messen einer Strömungsgeschwindigkeit und/oder einer Strömungsrate, umfassend einen Rotor (2), **dadurch gekennzeichnet, dass** eine Rotationsachse (8) des Rotors (2) quer, insbesondere orthogonal, zur Strömungsrichtung eines Fluides angeordnet ist.

2. Strömungssonde (1) nach dem Oberbegriff von Anspruch 1 oder nach Anspruch 1, **dadurch gekennzeichnet, dass** eine oder die Rotationsachse (8) des Rotors (2) längs einer Längsachse (19) der Strömungssonde (1) ausgerichtet ist.

3. Strömungssonde (1) nach Anspruch 1 oder Anspruch 2, **dadurch gekennzeichnet, dass** der Rotor (2) in einem Käfig (3) angeordnet ist.

4. Strömungssonde (1) nach einem der vorgehenden Ansprüche, **dadurch gekennzeichnet, dass** der Rotor (2) ein H-Darrieus-Rotor (9) und/oder ein Savonius-Rotor (7) ist.

5. Strömungssonde (1) nach einem der vorgehenden Ansprüche, **dadurch gekennzeichnet, dass** der Rotor (2) über ein magnetisches Element (12) verfügt, welches mit einem Hall-Sensor zusammenwirkt, um die Drehzahl des Rotors (2) zu messen, und/oder dass der Hall-Sensor an dem Käfig (3) oder an einem Sondenkopf (4) ausgebildet ist.

6. Strömungssonde (1) nach einem der vorgehenden Ansprüche, **dadurch gekennzeichnet, dass** der Käfig (3) über durchströmbare Durchlassöffnungen (14) verfügt und/oder dass der Rotor (2) über Rotorblätter (6) verfügt, insbesondere welche exzentrisch, insbesondere parallel, zur Rotationsachse (8) des Rotors angeordnet sind.

7. Strömungssonde (1) nach einem der vorgehenden Ansprüche, **dadurch gekennzeichnet, dass** die Rotorblätter (6) in einem Endbereich mit der Rotationsachse (8) des Rotors (2) zusammenfallen und/oder dass der Käfig (3) zylindrisch ist und/oder dass der Rotor (2) aus einem Metall oder einem Kunststoff gefertigt ist.

8. Strömungssonde (1) nach einem der vorgehenden Ansprüche, **dadurch gekennzeichnet, dass** der Sondenkopf (4) an dem Käfig (3) angeordnet ist, insbesondere wobei in dem Sondenkopf (4) eine Steuerungs- und Messelektronik verbaut ist, und/oder dass die Rotorblätter (6) gegenüber der Rotationsachse (8) des Rotors (2) angewinkelt, insbesondere nicht parallel, angeordnet sind, und/oder dass die Rotorblätter (6) gekrümmt sind.

9. Strömungssonde (1) nach einem der vorgehenden Ansprüche, **dadurch gekennzeichnet, dass** die Rotorblätter (6) mittels Streben (10) mit einem zentralen Rotationsbereich (11), insbesondere der Rotationsachse (8), des Rotors (2) verbunden sind, und dass die Streben (10) mit der Rotationsachse (8) einen Winkel kleiner als oder gleich 90° einschließen.

10. Strömungssonde (1) nach einem der vorgehenden Ansprüche, **dadurch gekennzeichnet, dass** der Käfig (3) mit dem Sondenkopf (4) mittels eines Gewindes (13) verbunden ist.

11. Strömungssonde (1) nach einem der vorgehenden Ansprüche, **dadurch gekennzeichnet, dass** die Rotorblätter (6) strebenfrei mit dem zentralen Rotationsbereich (11) des Rotors (2) verbunden sind.

12. Strömungssonde (1) nach einem der vorgehenden Ansprüche, **dadurch gekennzeichnet, dass** die Rotorblätter (6) spiegelantisymmetrisch um die Rotationsachse (8) angeordnet sind.

13. Strömungssonde (1) nach einem der vorgehenden Ansprüche, **dadurch gekennzeichnet, dass** die Rotorblätter (6) zu einer Anströmung quer zur Rotationsachse (8) ausgebildet sind.

14. Strömungssonde (1) nach einem der vorgehenden Ansprüche, **dadurch gekennzeichnet, dass** die Rotorblätter (6) zu einer Anströmung mit Gas, insbesondere mit atmosphärischer Luft, ausgebildet sind.

15. Verwendung eines Rotors (2), insbesondere eines H-Darrieus-Rotors (9) und/oder eines Savonius-Rotors (7), in einer Strömungssonde (1), wobei die oder eine Rotationsachse (8) des Rotors (2) quer, insbesondere orthogonal, zur Strömungsrichtung (22) eines Fluides, insbesondere Gases, und/oder längs einer oder der Längsachse (19) der Strömungssonde (1) angeordnet ist.
